# EUROPÄISCHE PATENTSCHRIFT

(11) **EP 1 468 770 B1**
(45) Veröffentlichungstag und Bekanntmachung des Hinweises auf die Patenterteilung: **09.07.2008**
(21) Anmeldenummer: 04007893.3
(22) Anmeldetag: 01.04.2004
(51) Int. Cl.: B23C 5/22

(54) **Schneidplatte, insbesondere für ein Fräswerkzeug**
Cutting insert, particularly for a milling tool
Plaquette de coupe, en particulier pour un outil de fraisage

(30) Priorität: 17.04.2003 DE 10317760
(43) Veröffentlichungstag der Anmeldung: 20.10.2004
(73) Patentinhaber: WALTER AG, 72072 Tübingen (DE)
(72) Erfinder: Stabel, Thorsten, 72116 Mössingen (DE); Dürr, Hans-Peter, 72810 Gomaringen (DE)
(74) Vertreter: Rüger, Barthelt & Abel Patentanwälte

(56) Entgegenhaltungen:
- WO-A-02/102536
- DE-U- 9 320 448
- GB-A- 1 154 754
- US-A- 4 915 548
- US-B1- 6 238 146
- US-B1- 6 422 931

## Beschreibung

Die Erfindung betrifft eine Schneidplatte z.B. für ein Fräswerkzeug, insbesondere einen Planfräser.

Fräswerkzeuge sind häufig mit Schneidplatten aus Hartmetall oder anderen Hartstoffen bestückt, die im Hinblick auf die Schneideigenschaften optimiert sind. An den Schneideinsätzen sind Schneidkanten, Freiflächen und Spanflächen ausgebildet, deren Formgebung die Arbeit des Schneidplattenwerkzeugs wesentlich beeinflusst. Dabei wird auch Augenmerk auf den Spanfluss gerichtet, d.h. auf die Art und Weise wie Späne entstehen und wie sie über die Spanfläche ablaufen, die der Schneidkante benachbart ist. Es hat sich gezeigt, dass einige Materialen bei der Zerspanung dazu neigen, auf Flächen, die Sie überstreichen, Ablagerungen zu hinterlassen. Dieser Vorgang wird als "Aufschmieren" bezeichnet. Sind durch Aufschmierung Materialansammlungen entstanden, können diese in mehrerlei Hinsicht nachteilig sein. Ist die Schneidplatte beispielsweise mit einer verschleißmindernden Beschichtung versehen, kann die Beschichtung durch Materialansammlungen gefährdet werden. Werden die Materialansammlungen zu groß und von darüber streichenden Spänen mitgerissen, kann dies unter Umständen zur Beschädigung der Beschichtung führen. Außerdem können die Materialansammlungen an Flächen oder Flächenbereichen entstehen, die bei einer anderen Einbaulage der Schneidplatte, die beispielsweise als Wendeschneidplatte ausgebildet ist, als Positionier- oder Anlagefläche dienen. Materialansammlungen auf solchen Flächen führen somit zu Fehlpositionierungen. Solche Fehlpositionierungen gilt es zu vermeiden.

Aus der DE 196 53 921 A1 ist eine dreieckige Wendeschneidplatte bekannt, die eine ringsumlaufende Schneidkante aufweist, an die sich eine Spanmulde, d.h. eine muldenförmige Spanfläche anschließt. Die Spanfläche geht in eine Deckfläche über, die unterhalb der Schneidkante liegt. Die Deckfläche ist dennoch im Spanlaufbereich angeordnet, so dass sich hier Materialansammlungen bilden können.

Weiter offenbart die genannte Schrift in Draufsicht vier rhombische Schneidplatten mit ringsumlaufender Schneidkante. An die Schneidkante schließt sich wiederum unter einem positiven Spanwinkel eine Spanfläche an. In den stumpfen Eckbereichen der rhombischen Platte geht die Spanfläche stufenlos in die ebene Anlagefläche über, die unterhalb der Schneidkanten liegt. In den spitzwinkligen Ecken schließt sich an die unmittelbar an die Eckschneidkante anschließende Spanfläche ein Plateau an, das seinerseits mit einer Stufe in die Anlagefläche übergeht. Der stumpfe nach außen hin konkave Winkel zwischen der Spanfläche und dem Plateau bewirkt, dass Späne gegen die Plateaufläche laufen und hier Ablagerungen bilden können.

Aus der GB-PS 1154754 ist ein Drehwerkzeug mit einer Schneidplatte bekannt, die eine quaderförmige Grundform mit vier im rechten Winkel zueinander stehenden Seitenflächen aufweist. Diese grenzen an Schneidkanten, die im Quadrat angeordnet sind. An die Schneidkanten schließen sich Spanflächen an, die gegenüber einer ebenen Deckfläche der Schneidplatte erhöht ausgebildet und somit von der Deckfläche durch eine ringsum laufende Stufe getrennt sind. Die Stufe erstreckt sich entlang der Spanflächen auch über die Eckbereiche hinaus, wobei sie entlang ihres gesamten Umfangs eine konstante Höhe aufweist.

Aus der US-A-6 238 146 ist eine Tangentialschneidplatte mit einer Spanfläche bekannt, die in der Mitte einen streifenartigen, zurückgesetzten Bereich aufweist. Dieser Spanflächenbereich schließt über zueinander parallele Stufen an die übrige Spanfläche an. Die Spanfläche ist an ihrem gesamten Rand von einem schräg zu der Schneidkante hin ansteigenden streifenförmigen Abschnitt umgeben, der stufenlos an die übrige Spanfläche anschließt.

Bei dieser Schneidplatte laufen abgehobene Späne zunächst über den schrägen Abschnitt der Spanfläche und dann über die sich anschließenden ebenen Bereiche derselben.

Die DE-A-93 20 448 offenbart eine Schneidplatte quadratischer Grundform mit einer ringsum laufenden Schneidkante, die von einer Ecke ausgehend zunächst ansteigt und dann wieder abfällt. Die Schneidkante schließt an eine schräg geneigte Spanfläche an, die ohne Stufe in einen ebenen Spanflächenabschnitt übergeht.

Auch hier besteht Gefahr des Aufschmierens von Spänen auf die Spanfläche.

Die US-A-6 422 931 offenbart eine Schneidplatte für ein Zerspanungswerkzeug mit einer ringsum laufenden Schneidkante. An die Schneidkante schließt sich eine Spanfläche an, die über eine Stufe in eine erhabene Plateaufläche übergeht. Die Plateaufläche liegt somit oberhalb der Schneidkanten.

Die WO 02/102536 offenbart eine Schneidplatte für ein Fräswerkzeug mit einer Spanfläche, in die eine Stufe eingearbeitet ist. Die Stufe führt zunächst an einer Schneidkante entlang, geht dann an der Eckenschneidkante vorbei und erreicht die andere Schneidkante. Die Stufe hat entlang ihrer gesamten Länge eine einheitliche Höhe. Die sich an die Stufe anschließende, zur Befestigungsöffnung hin führende Fläche ist gewölbt.

Davon ausgehend ist es Aufgabe der Erfindung, eine Schneidplatte zu schaffen, die eine verminderte Neigung zur Ausbildung von Materialansammlungen beim Zerspanungsvorgang aufweist.

Diese Aufgabe wird durch die Schneidplatte gemäß Anspruch 1 gelöst:

Die erfindungsgemäße Schneidplatte weist eine Spanfläche auf, die insbesondere in den Schneidkanten-Eckbereichen mit einer Stufe in die angrenzende Plateaufläche übergeht, wobei die Stufe hier ihre größte Höhe aufweist. Aufgrund der Krümmung der Eckenschneidkante kann der von der Eckenschneidkante ablaufende Bereich des Spans andere Fließ- und Brucheigenschaften aufweisen als der übrige Span. Die im Eckenbereich besonders hohe Stufe bietet hier einen guten Schutz vor dem Anlaufen des Spans gegen die Deckfläche der Schneidplatte. Insbesondere bei der Anwendung der erfindungsgemäßen Schneidplatten in so genannten Planfräsern, bei denen auch an den Eckschneidkanten Zerspanungsleistung erbracht wird, zeigt sich die verminderte Neigung zur Ausbildung von Materialansammlungen an Flächenbereichen, die an die Spanfläche angrenzen und insbesondere in den Eckenbereichen. Dies ermöglicht eine höhere Standzeit solcher Schneidplatten, wenn davon ausgegangen werden kann, dass der Schneidplattenverschleiß beispielsweise infolge des Ablösens von Materialansammlungen und dadurch verursachten Beschädigungen von Beschichtungen vermindert ist. Bedarfsweise kann die Schneidplatte auch in einem Drehwerkzeug Anwendung finden.

Außerdem ist die verminderte Neigung zur Ausbildung von Materialansammlungen auf Spanflächen benachbarter Oberflächenbereiche der Schneidplatte vorteilhaft hinsichtlich einer korrekten Positionierung der Schneidplatte. Dies gilt insbesondere, wenn die Schneidplatte als Wendeschneidplatte ausgebildet ist. In diesen Fällen kann die der Spanfläche benachbarte Deckfläche nach Wenden der Schneidplatte als Auflagefläche dienen. Ist die Deckfläche bei Erstgebrauch der Schneidplatte frei von Ablagerungen geblieben, können diese, wenn die Schneidplatte nun in gewendeter Position weiter verwendet wird, die korrekte Einstellung der Schneidplatte nicht behindern.

Bei einer vorteilhaften Ausführungsform der Schneidplatte, weist der Grundkörper zwei an einander gegenüberliegenden Seiten ausgebildete Schneidkanten auf, so dass die Schneidplatte als Wendeschneidplatte Verwendung finden kann. Es wird dabei bevorzugt, die Schneidplattenoberseite und die Schneidplattenunterseite zueinander deckungsgleich auszubilden.

Prinzipiell kann die Schneidplatte drei- oder mehreckig ausgebildet sein, vorzugsweise ist sie viereckig ausgebildet. Dies ergibt sowohl an der Oberseite als auch an der Unterseite der Schneidplatte jeweils vier nutzbare Schneidkanten. Die Wendeschneidplatte kann in diesem Fall insgesamt acht mal eingesetzt werden. Das heißt, sie weist acht einzeln abnutzbare Schneidkanten auf.

Es wird als besonders vorteilhaft angesehen, wenn die Spanfläche an jeder Schneidkantenecke jeweils über eine Stufe in die Plateaufläche übergeht. Damit wird der Vorzug der Vermeidung von Materialansammlungen und der Vermeidung des Aufbaus von Ablagerungen auf der Auflagefläche (Plateaufläche) an jeder Schneidkantenecke erzielt. Dies ist insbesondere für solche Wendeschneidplatten von Bedeutung, bei denen potentiell an jeder Seite und an jeder Schneidkantenecke Materialabtrag, d.h. Zerspanungsarbeit auftreten kann.

Die Höhe der Stufe, die die Spanfläche von der benachbarten Plateaufläche trennt, ist abhängig von dem zu zerspanenden Material vorzugsweise so bemessen, dass ihre Höhe ausreicht, um die an der Schneidkante entstehenden Späne von der Plateaufläche fernzuhalten. Die Plateaufläche wird somit vorzugsweise nicht von Spänen überstrichen. Jedenfalls aber laufen die Späne nicht mit Kraft an die Plateaufläche an.

Die Stufe ist vorzugsweise umso höher, je größer der positive Spanwinkel an der Schneidplatte ist. Damit eignen sich Schneidplatten mit hoher Stufe, d.h. mit tief zurückgesetzter Plateaufläche besonders gut für Schneidplatten mit geringem Keilwinkel. Die Schneidplattengeometrie gestattet die Erzielung positiver Radial- und Axialspanwinkel bei negativem Einbau der Schneidplatte sowohl in axialer Richtung als auch in Radialrichtung.

Die Seitenflächen sind vorzugsweise Planflächen, die wiederum vorzugsweise in einem Winkel von 90° zu einer Schneidplattenmittelebene orientiert sind. Ein positiver Freiwinkel entsteht an der Schneidplatte somit lediglich, wenn die Schneidplatte in dem Werkzeug unter einem negativen Winkel eingebaut wird. Die Seitenflächen, die die Freiflächen bilden, können auch facettiert sein. Beispielsweise schließt der an die Schneidkante anschließende Freiflächenbereich mit der übrigen Seitenfläche einen nach außen weisenden, d.h. konvexen stumpfen Winkel ein. Dies ist bei hoch positiver Plattengeometrie, d.h. in solchen Fällen möglich und vorteilhaft, in denen der an der Schneidkante vorhandene Keilwinkel relativ gering, z.B. kleiner als 60° oder 70° ist. Die erfindungsgemäße Schneidplatte kann als Tangentialplatte oder als Radialplatte ausgebildet sein. Dies wird durch die Anordnung der Befestigungsbohrung bestimmt, die im Falle der Radialplatte durch die Plateauflächen geht. Ist die Befestigungsbohrung hingegen parallel zu der von der Spanfläche umschlossenen Plateaufläche orientiert, handelt es sich um eine Tangentialplatte.

Bei bevorzugten Ausführungsformen erstreckt sich die Spanfläche lückenlos um die Plateaufläche herum und grenzt über eine ebenfalls lückenlose Stufe an die Plateaufläche. Der Schutz vor dem Aufbau von Ablagerung (Aufschmieren) ist somit für die gesamte Plateaufläche gegeben. Als zweckmäßig hat sich dabei erwiesen, wenn die Stufe an den Schneidkantenecken jeweils ihre Maximalhöhe aufweist.

Weitere Einzelheiten vorteilhafter Ausführungsformen der Erfindung sind Gegenstand der Zeichnung, der zugehörigen Beschreibung oder von Unteransprüchen.

In der Zeichnung sind Ausführungsbeispiele der Erfindung veranschaulicht. Es zeigen:
- Fig. 1: einen Planfräser mit erfindungsgemäßen Schneidplatten in perspektivischer Darstellung,
- Fig. 2: den Planfräser nach Figur 1 in Seitenansicht,
- Fig. 3: eine Schneidplatte des Planfräsers nach Figur 1 und 2 in perspektivischer Ansicht,
- Fig. 4: die Schneidplatte nach Figur 3 in Draufsicht,
- Fig. 5: die Schneidplatte nach Figur 3 in Seitenansicht,
- Fig. 6: den Planfräser nach Figur 1 in einer Detailansicht,
- Fig. 7: den Fräser nach Figur 6 in Explosionsdarstellung,
- Fig. 8: den Werkzeugkörper des Fräsers nach Figur 6 in einer Detailansicht,
- Fig. 9: den Fräser nach Figur 1 mit einem unbestückten und mit einem bestückten Plattensitz,
- Fig. 10: die Schneidplatte nach Figur 3 in einer vergrößerten Draufsicht,
- Fig. 11: die Schneidplatte nach Figur 3 in einer vergrößerten Seitenansicht,
- Fig. 12: die Schneidplatte nach Figur 3 in einer vergrößerten Perspektivansicht,
- Fig. 13: eine abgewandelte Ausführungsform einer erfindungsgemäßen Schneidplatte in Draufsicht,
- Fig. 14: die Schneidplatte nach Figur 13 in Seitenansicht,
- Fig. 15: die Schneidplatte nach Figur 13 in Perspektivansicht,
- Fig. 16: einen abgewandelten Planfräser mit erfindungsgemäßen Schneidplatten in perspektivischer Darstellung,
- Fig. 17: den Planfräser nach Figur 16 in Seitenansicht,
- Fig. 18: eine Schneidplatte des Planfräsers nach Figur 16 in Perspektivdarstellung,
- Fig. 19: eine Draufsicht der Schneidplatte nach Figur 18,
- Fig. 20: eine Seitenansicht der Schneidplatte nach Figur 18,
- Fig. 21: das Fräswerkzeug nach Figur 16 in einer auszugsweisen Darstellung,
- Fig. 22: eine Schneidplatte für den Planfräser nach Figur 16 in vergrößerter Draufsicht,
- Fig. 23: die Schneidplatte nach Figur 20 in vergrößerter Darstellung,
- Fig. 24: die Schneidplatte nach Figur 18 in vergrößerter Darstellung,
- Fig. 25 u. 26: abgewandelte Ausführungsformen der Schneidplatte zur Verwendung als Tangentialplatte und
- Fig. 27: die Verhältnisse beim Spanablauf bei den vorstehenden Schneidplatten.

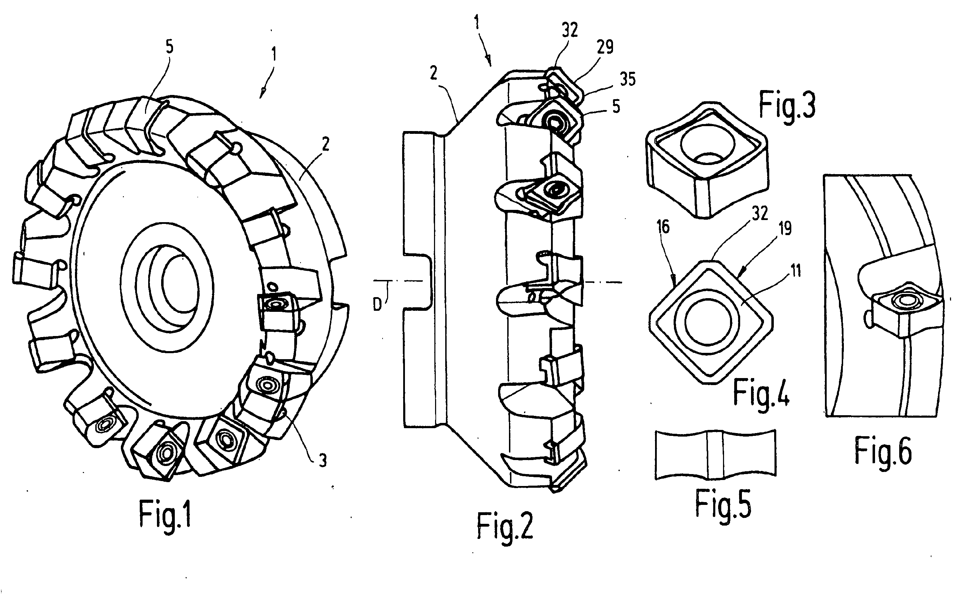

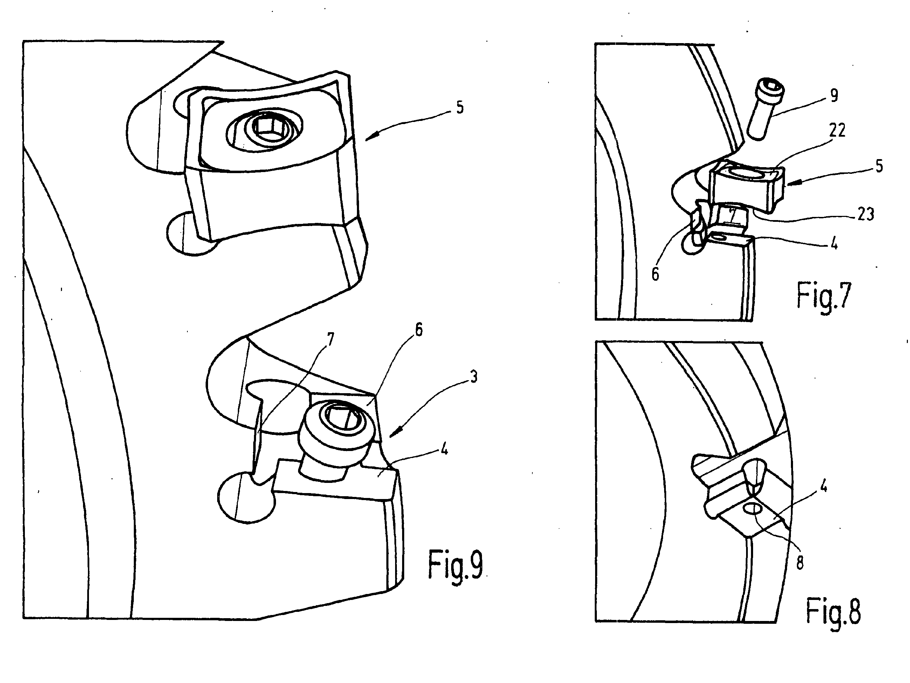

In Figur 1 ist ein Planfräser 1 veranschaulicht, der einen Werkzeugkörper 2 mit daran ausgebildeten Plattensitzen 3 aufweist. Ein solcher Plattensitz 3 ist gesondert in Figur 9 veranschaulicht. Er weist eine ebene Auflagefläche 4 für die direkte Anlage einer Schneidplatte 5 auf. Die Auflagefläche 4 ist z.B. rechteckig. Sie ist an allen vier Kanten freigestellt. In der Nachbarschaft sind zumindest zwei rechtwinklig zu der Auflagefläche 4 orientierte seitliche Anlageflächen 6, 7 vorgesehen.

Sie sind unmittelbar an dem Werkzeugkörper 2 ausgebildet und gehören zu dem Plattensitz 3, um der Schneidplatte Seitenhalt zu geben. An dem Plattensitz ist außerdem eine durch die Auflagefläche 4 gehende Gewindebohrung 8 ausgebildet, der eine Befestigungsschraube 9 zugeordnet ist (siehe Fig. 7 und 8). An dem Werkzeugkörper 2 sind dem Plattensitz 3 entsprechende weitere Plattensitze konzentrisch zu einer Drehachse des Werkzeugkörpers 2 angeordnet. An allen Plattensätzen 3 sind gleiche Schneidplatten 5 angeordnet. Der Planfräser 1 weist, wie insbesondere aus Figur 2 hervorgeht, lediglich Schneidplatten auf, deren Diagonale ungefähr parallel zu der Drehachse D orientiert ist.

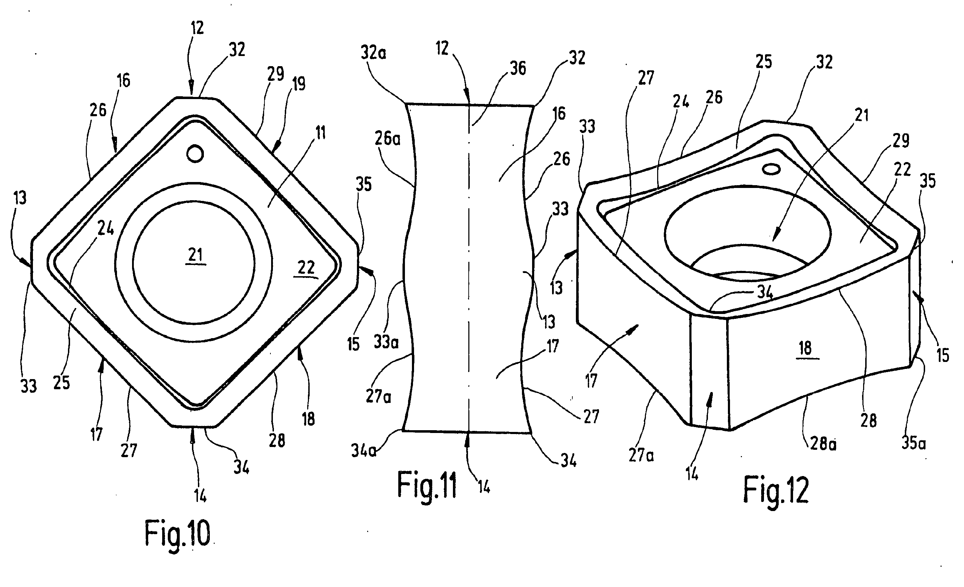

Die untereinander gleich ausgebildeten Schneidplatten 5 sind in den Figuren 3 bis 5 sowie 10 bis 12 gesondert veranschaulicht. Die Schneidplatte 5 weist einen Grundkörper 11 mit einem aus Figur 4 und 10 ersichtlichen quadratischem Umriss auf. An ihren vier Ecken kann die Schneidplatte 5 mit Eckenfasen 12, 13, 14, 15 versehen sein. Die Eckenfasen 12 bis 15 sind beispielsweise durch ebene Flächenbereiche oder Facetten gebildet, die zwischen benachbarten, vorzugsweise ebenen Seitenflächen 16, 17, 18, 19 angeordnet sind. Der Übergang zwischen den Eckenfasen 12 bis 15 und den jeweils benachbarten Seitenflächen 16 bis 19 kann durch eine scharfe Kante oder durch eine etwas gerundete Kante gebildet sein, die parallel zu einer sich durch den Grundkörper 11 erstreckenden Befestigungsbohrung 21 verläuft.

Die Befestigungsbohrung 21 ist an der glatten Oberseite von einer Plateaufläche 22 und an der Plattenunterseite ebenfalls von einer Plateaufläche 23 umgeben. Letztere dient, wie aus Figur 7 hervorgeht, zur Auflage an der Auflagefläche 4. Die Plateaufläche 22 dient zur Anlage an der Auflagefläche 4, wenn die Schneidplatte 5 gewendet wird. Die Plateauflächen 22, 23 sind untereinander gleich ausgebildet. Die Beschreibung der Plateaufläche 22 gilt deshalb entsprechend für die Plateaufläche 23.

Die Plateaufläche 22 ist im Wesentlichen quadratisch und eben ausgebildet. Sie endet in einem Abstand zu den Seitenflächen 16, 17, 18, 19 in einer ringsumlaufenden Stufe 24, die sich ungefähr in parallelem Abstand zu den Seitenflächen 16, 17, 18, 19 erstreckt. In Nachbarschaft der Eckenfasen 12, 13, 14, 15 ist die Stufe 24 jeweils in einer etwa rechtwinkligen Biegung gerundet.

An die Stufe 24 schließt sich eine ringsumlaufende Spanfläche 25 an, die gegen die Plateaufläche 22 geneigt ist. Zwischen der Spanfläche 25 und den Seitenflächen 16, 17, 18, 19 sind Schneidkanten 26, 27, 28, 29 festgelegt. Mit den Eckenfasen 12, 13, 14, 15 begrenzt die Spanfläche 25 Eckenschneidkanten 32, 33, 34, 35. Die Schneidkanten 26 bis 29 und die Eckenschneidkanten 32 bis 35 finden ihre Entsprechung in entsprechenden Schneidkanten und Eckenschneidkanten an der Unterseite des Grundkörpers 11. Sie sind zur Unterscheidung in Figur 11 und 12 soweit sichtbar, jeweils mit einem Buchstabenindex "a" versehen. Die Eckenschneidkanten 32 bis 35 (32a bis 35a) sind vorzugsweise etwa gerade ausgebildet. Ebenso sind die Schneidkanten 26 bis 29 (26a bis 29a) im Wesentlichen gerade, dabei aber vorzugsweise etwas durchhängend ausgebildet, so dass die durch die Eckenschneidkanten 26 bis 29, (26a bis 29a) gebildeten Schneidecken erhaben über die Plateaufläche 22 vorstehen. Die Spanfläche 25 weist vorzugsweise eine konstante Neigung auf. Die Stufe 24 weist etwa in Schneidkantenmitte der Schneidkanten 26 bis 29 (26a bis 29a) ihre geringste Höhe auf. Dagegen weist die parallel zu den Schneidkanten 26 bis 29 etwa gerade verlaufende Stufe 24 ihre größte Höhe in Nachbarschaft zu den Eckerschneidkanten 32 bis 35 (32a bis 35a) auf.

Die Spanfläche 25 kann z.B. in einem Schleifprozess präzise gefertigt worden sein. In der Regel ist sie aber fertig gesintert. Die Plateaufläche 22 ist einem Schleifprozess entzogen. Es handelt sich hier vorzugsweise um eine unbearbeitete Fläche, wie sie beim Sintern und evtl. nachfolgendem Beschichten entsteht.

Die Schneidplatte 5 ist vorzugsweise symmetrisch zu einer Mittelebene ausgebildet, die in Figur 11 durch eine strichpunktierte Linie 36 angedeutet ist. Auf ihr steht die Befestigungsbohrung 21 senkrecht. Außerdem führt sie durch den Schwerpunkt des Grundkörpers 11.

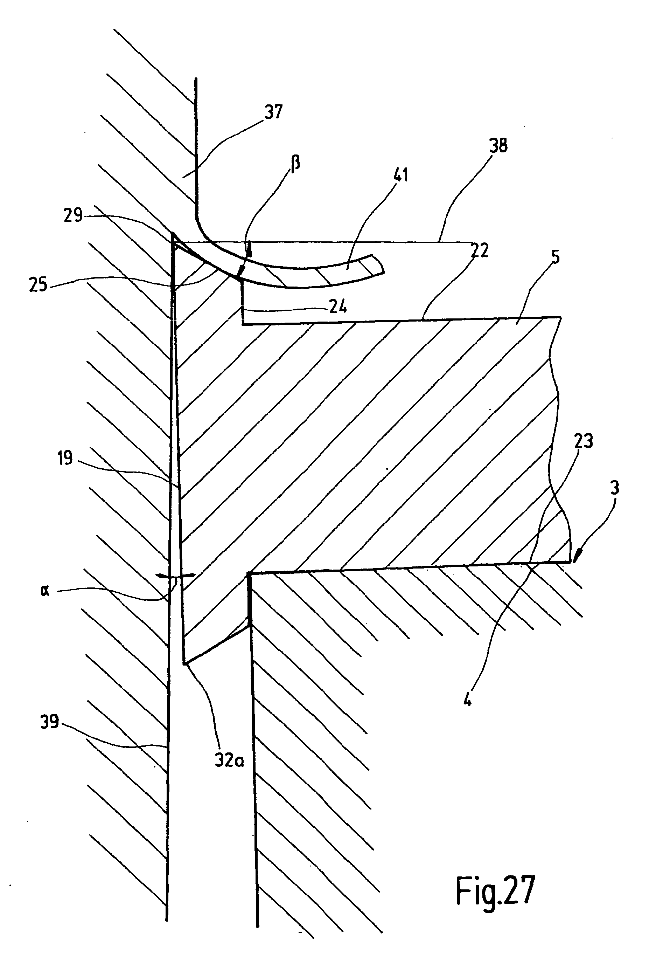

Die Befestigung der Schneidplatte 5 an dem Plattensitz geht aus den Figuren 6, 7 gesondert hervor. Die Auflagefläche 4 weist eine Größe auf, die der Größe der Plateaufläche 23 entspricht. Die Position ist dabei so eingestellt, dass die Seitenflächen 16 und 19 an den benachbarten Anlageflächen 6, 7 des Plattensitzes anliegen, wenn die Plateaufläche 23 auf der Auflagefläche 4 zu liegen kommt. Die vorzugsweise etwas schräg geführte Gewindebohrung 8 erzwingt einen schrägen Sitz der Befestigungsschraube 9, die dadurch mit ihrem Kopf nicht nur die Plateaufläche 23 gegen die Auflagefläche 4 sondern auch die Seitenflächen 16, 19 gegen die Anlageflächen 6, 7 drückt. Die Schneidplatte 5 ist dadurch etwa so, wie vergrößert in Figur 27 dargestellt, gehalten. Die Einstellung der Schneidplatte 5 ist insgesamt negativ. Dies gilt sowohl für die Axialrichtung parallel zu der Drehachse D des Planfräsers 1 als auch im Hinblick auf die entsprechende Radialrichtung.

In Figur 27 ist die Schneidkante 29 im Eingriff in einem Werkstück 37 veranschaulicht. Die zugehörige Radialrichtung bezogen auf die Drehachse des Werkzeugs ist an der Hauptschneidkante 29 durch eine Linie 38 angedeutet. Die Freifläche (Seitenfläche 19) schließt mit der Linie 38 einen Winkel ein, der kleiner als 90° ist, wodurch ein positiver Freiwinkel α zwischen der Seitenfläche 19 und der benachbarten Werkstückoberfläche 39 besteht. Zugleich entsteht ein positiver Spanwinkel β zwischen der Spanfläche 25 und der von der Linie 38 markierten Radialrichtung. Der positive Spanwinkel β entsteht trotz negativem Platteneinbau durch den geringen Keilwinkel der Schneidplatte an der Schneidkante 29.

Der insoweit beschriebene Planfräser 1 arbeitet wie folgt:

In Betrieb dreht der Werkzeugkörper 2 um die Drehachse D und wird dabei quer zu der Drehachse D an einer Werkstückoberfläche 39 entlang bewegt. Die Schneidkanten 29 sind die Hauptschneidkanten. Die rechtwinklig zu der Drehachse D orientierten Eckenschneidkanten 35 sind Nebenschneidkanten, die mit geringerer Zerspanungsarbeit kreisend über die erzeugte Planfläche geführt werden.

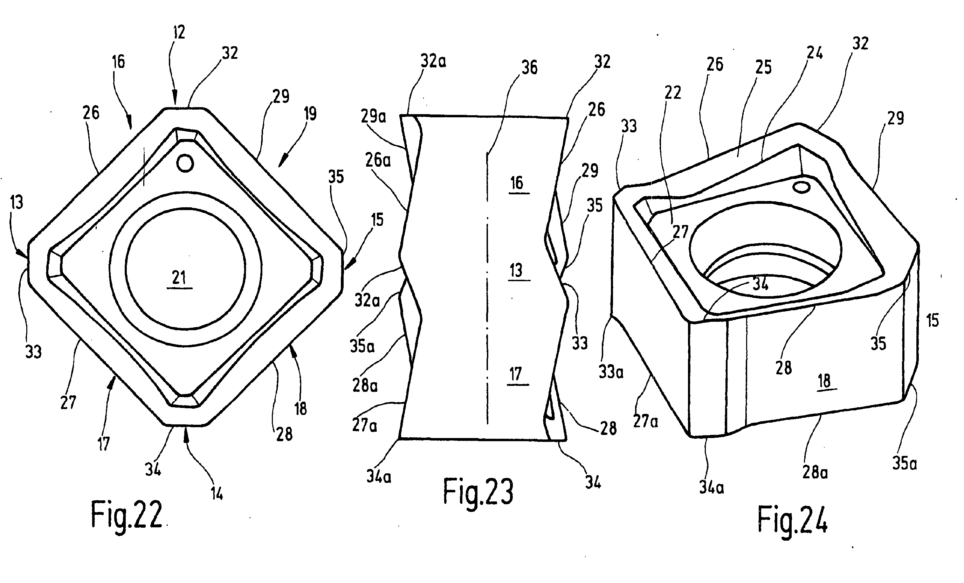

An den Schneidkanten 29 wird die Hauptzerspanungsarbeit geleistet. Hier entstehen Späne 41 (Fig. 27) die von der Werkstückoberfläche 39 abgehoben werden. Die Späne 41 laufen dabei über die Spanfläche 25, wobei sie eine Biegung erhalten. Diese Biegung oder Krümmung verhindert, dass die Späne 41 an die durch die Stufe 24 zurück gesetzte Plateaufläche 22 anlaufen. Vielmehr laufen die Späne 41 frei über die Stufe 24 hinaus, wobei sie infolge der ihnen in der Nähe der Eckenschneidkante 35 bzw. der Schneidkante 26 eingeprägten Eigenkrümmung hinter der Stufe 24 von der Plateaufläche 22 weg laufen. Die Späne 41 berühren die Plateaufläche 22 allenfalls mit geringem Druck. Sie laufen jedenfalls nicht steil gegen diese Fläche an. Somit bilden sich keine Ablagerungen an der Plateaufläche 22. Insbesondere unterliegt diese nicht der Aufschmierung. Sie kann in ihrer gesamten Größe als Auflagefläche dienen, wenn die Schneidplatte 5 auf dem Plattensitz 3 gewendet wird. Dazu wird die Befestigungsschraube 9 gelöst und die Schneidplatte 5 wird so umgekehrt, dass ihre Plateaufläche 23 nach oben und ihre Plateaufläche 22 in Anlage mit der Auflagefläche 4 kommt. Dadurch wird die Eckenschneidkante 35a bzw. die Schneidkante 28a zu der aktiven Schneidkante (siehe Zuordnung gemäß Fig. 24). Die Positionierung der Schneidplatte 5 ist dabei wegen der nicht verschmutzten Plateaufläche 22 ohne größere Probleme möglich.

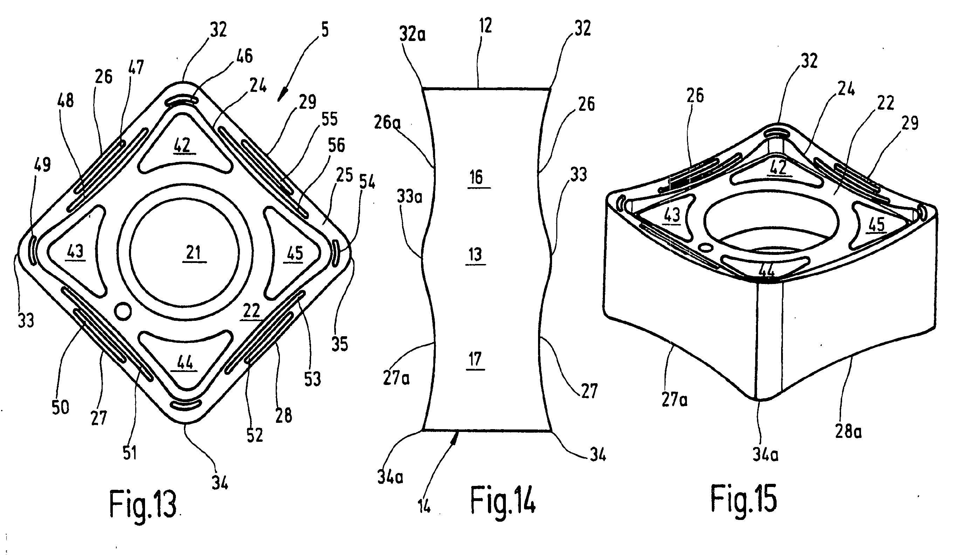

Die Figuren 13 bis 15 veranschaulichen eine abgewandelte Ausführungsform der Schneidplatte 5, die ohne Veränderungen des Werkzeugkörpers 2 an den Plattensitzen 3 angebracht werden kann. Die abgewandelte Schneidplatte 5 unterscheidet sich von der vorstehend beschriebenen Schneidplatte 5 durch erhabene Flächenbereiche 42, 43, 44, 45 die auf der Plateaufläche 22 ausgebildet sind. Die erhabenen Flächenbereiche 42 bis 45 sind auf Erhöhungen angebracht, die niedriger sind als die Stufe 24. Die Flächenbereiche 42 bis 45 können dabei etwa dreieckig umrandet sein, wobei sie insbesondere in der Nähe der Schneidplattenecken angebracht sind. Etwa in der Mitte der Schneidkanten 26 bis 29 ist zwischen den erhabenen Plateaus, auf denen die Flächenbereiche 42 bis 45 festgelegt sind, vorzugsweise jeweils eine Lücke vorhanden. Die Lücke ist dann jeweils in dem Bereich der Stufe 24 anzutreffen, in der die Stufe 24 ihre geringste Höhe aufweist.

Weiter kann die Spanfläche 25 im Unterschied zu vorbeschriebenen Ausführungsformen mit parallel zu den Schneidkanten 26 bis 29 sowie ungefähr parallel zu den Eckenschneidkanten 32, 33, 34, 35 ausgerichteten Spanbrechernuten 46, 47, 48, 49, 50, 51, 52, 53, 54, 55, 56 versehen sein. Die Rückseite der Wendeschneidplatte 5 gemäß Figur 13 ist genau so ausgebildet.

Die insoweit beschriebene Wendeschneidplatte 5 gemäß Figur 13 bis 15 eignet sich infolge ihrer Spanbrechernuten 46 bis 56 auch zur Zerspanung von Materialien, die zur Ausbildung eher langer Späne neigen. Außerdem ist sie besonders unempfindlich gegen Aufschmieren. In den Eckenbereichen, in denen die Stufe 24 relativ hoch ist, sind die dort angeordneten zur Positionierung dienenden Flächenbereiche 42 bis 45 im Schatten der jeweils benachbarten Stufe 24 gegen Aufschmieren durch vorbeilaufende Späne geschützt. Mittig an den Schneidkanten 26, 27, 28, 29 ist die Stufe 24 weniger hoch. Treffen hier Späne auf die Plateaufläche 22 auf und hinterlassen dabei Spuren, ist dies weitgehend unschädlich, denn die Plateaufläche 22 dient in diesen Bereichen gerade nicht der Auflage. Vielmehr wird diese Funktion von diesen erhabenen Flächenbereichen 42 bis 45 übernommen, die in den Ecken der Schneidplatte 5 angeordnet sind. Dabei können die Flächenbereiche 42 bis 45 unmittelbar an die Stufe 24 anschließen oder, wie in Figur 13 und 15 veranschaulicht ist, in einem gewissen Abstand zu dieser angeordnet sein. Die Flächenbereiche 42 bis 45, die vorzugsweise um die Befestigungsbohrung 21 herum angeordnet sind, bieten einen sicheren Sitz der Schneidplatte 5 an dem Plattensitz 3.

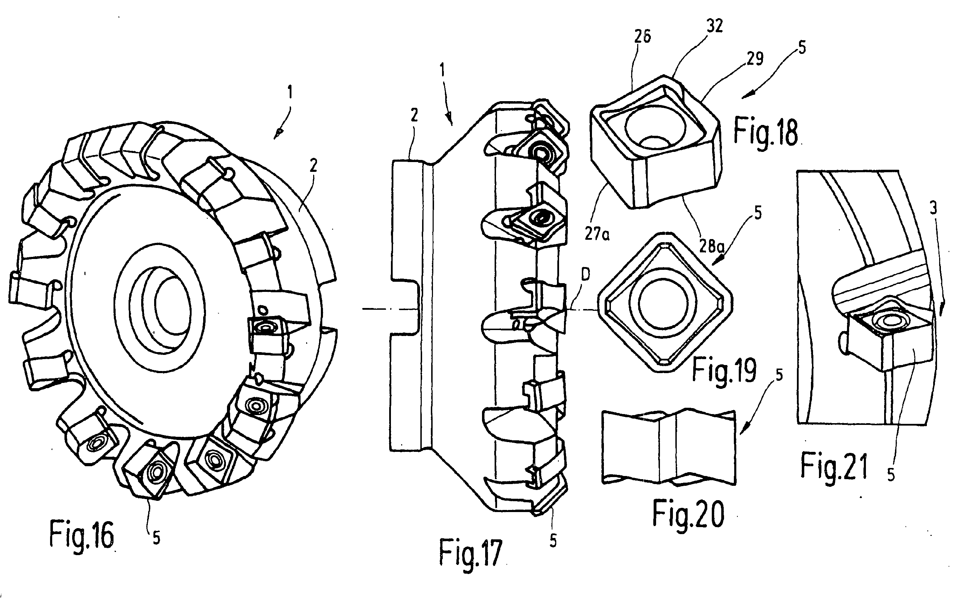

Eine weitere Variante einer Ausführungsform eines Planfräsers 1 und einer zugehörigen Schneidplatte 5 geht aus den Figuren 16 bis 24 hervor. Soweit nicht nachfolgend ausdrücklich anders beschrieben, gilt die vorstehende Beschreibung unter Zugrundelegung gleicher Bezugszeichen entsprechend.

Die vorstehend beschriebenen Schneidplatten 5 sind sowohl bzgl. der Mittelebene (Linie 36) als auch zu entsprechenden Ebenen symmetrisch ausgebildet, die die Bohrungsachse der Bohrung 21 enthalten und parallel zu den Seitenflächen oder diagonal zu dem von den Seitenflächen definierten Quadrat orientiert sind. Die Symmetrie der Schneidplatte nach den Figuren 18 bis 20 bzw. 22 bis 24 ist geringer. Sie sind bzgl. der Mittelebene (Linie 36 in Figur 23) nicht symmetrisch ausgebildet. Die Schneidkanten 26, 26a, 27, 27a, 28, 28a sowie 29, 29a sind jeweils paarweise parallel zueinander orientiert und vorzugsweise gerade ausgebildet. Sie sind dabei aber zu der Mittelebene geneigt angeordnet. Eben dies gilt für die Eckenschneidkanten 32, 32a, 33, 33a, 34, 34a, 35, 35a. Wiederum läuft die Stufe 24, wie Figur 24 zeigt, ringsum, wobei sie im Bereich der Eckenschneidkanten 32 bis 35 ihre größte Höhe erreicht. Die Spanfläche 25 weist wiederum eine konstante Neigung gegenüber der Mittelebene auf. Es ist jedoch auch möglich, die Neigung insbesondere im Bereich der Eckenschneidkanten 32, 35 gezielt zu vergrößern oder zu verringern, um besondere Schneideigenschaften zu erreichen. Insbesondere die Vergrößerung des Spanwinkels kann bei einigen Zerspanungsaufgaben zu vorteilhaften Ergebnissen führen. Das Problem des Aufschmierens auf die Plateaufläche 22 ist durch die große Höhe der hier vorhandenen Stufe 24 gemildert oder beseitigt.

Die Schneidplatte 5 gemäß Figur 18 bis 20 (22 bis 24) gestattet gemäß Figur 21 bei negativem Einbau die Erzielung besonders großer positiver Spanwinkel. Aufgrund der rechtwinkligen Orientierung der Seitenflächen 16, 17, 18, 19 zu der Mittelebene, wird die Schneidplatte 5 als Negativplatte angesehen. Bei negativem Einbau werden dennoch große positive Span- und Freiwinkel erreicht. Sie eignet sich zur Zerspanung kritischer Materialen wie Aluminium, weichem Stahl sowie Edelstahl. Die Schneidplatte 5 weist an den Schneidkanten ihre maximale Dicke auf. In der Schneidplattenmitte ist die Dicke minimal. Dies entspricht einer optimalen Volumenausnutzung bzw. Ausnutzung des Schneidplattenmaterials. Die Schneidplatte 5 ist aufgrund ihrer Geometrie einfach herstellbar. Sie kann zudem an den Seitenflächen 16, 17, 18, 19, an den Eckenfasen 12, 13, 14, 15 und an der Spanfläche 24 (24a) geschliffen werden, ohne dass dabei größere technologische Probleme auftreten. Die in den Figuren 22 bis 24 veranschaulichte Schneidplatte 5 ermöglicht außerdem besonders große Achswinkel (bei radial und axial negativer Einbaulage im Werkzeugkörper 2).

Die Schneidplatte weist acht Schneidkanten (26 bis 29 und 26a bis 29a) auf, die nacheinander zum Einsatz kommen können. Sie hat dadurch eine lange Standzeit. Die Schneidkanten 26 bis 29 sowie 26a bis 29a werden in der Regel ausgehend von ihrer jeweils benachbarten Eckenschneidkante nur bis zur Mitte beansprucht, weil ein entsprechendes Fräswerkzeug in axialer Richtung meist nur mit einer Schnitttiefe eingesetzt wird, die jeweils lediglich die halbe Schneidkantenlänge beansprucht. Deshalb können die benutzten Schneidplatten, die beispielsweise in einem rechtsschneidigen Werkzeug eingesetzt worden sind, nochmals in einem linksschneidigen Werkzeug in bis zu acht verschiedenen Positionen eingesetzt werden. Die Geometrie weist keinerlei Störkanten auf, wodurch ein freier Spanablauf sichergestellt ist. Die Schneidkanten der Schneidplatte 5 nach den Figuren 10 bis 12 sowie nach den Figuren 13 bis 15 sind achsensymmetrisch angeordnet. Die Schneidkanten der Wendeschneidplatte nach Figur 22 bis 24 sind 90° bzw. 180° drehsymmetrisch angeordnet. Die 90°-Drehsymmetrie bezieht sich auf die Bohrungsachse der Befestigungsbohrung 21, während sich die 180°-Drehsymmetrie auf das Wenden der Schneidplatte 5 bezieht, wobei die Oberseite und die Unterseite der Schneidplatte ihren Platz tauschen.

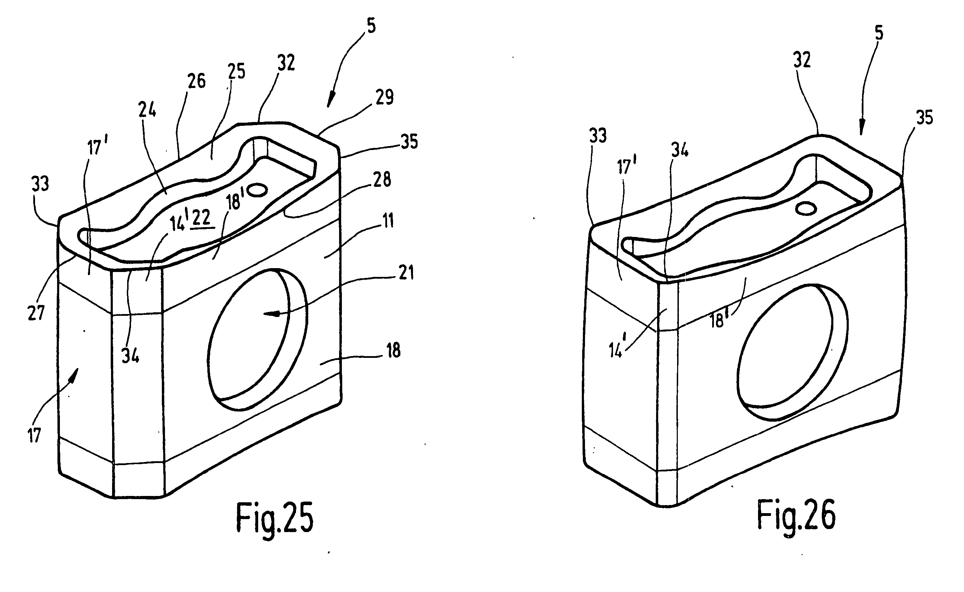

Zum Einsatz an Werkzeugkörpern mit tangentialem Schneidplatteneinbau können die Schneidplatten gemäß Figur 25 oder alternativ gemäß Figur 26 vorgesehen werden. Die in Figur 25 veranschaulichte Schneidplatte 5 weist einen quaderförmigen Grundkörper 11 auf, dessen Schneidkanten 26, 27, 28, 29 an einer Schmalseite des Grundkörpers 11 ausgebildet sind. Zwischen Schneidkanten 26 bis 29 sind Eckenschneidkanten 32, 33, 34, 35 vorgesehen. Die an die Schneidkante 27 grenzende Seitenfläche 17 ist eine schmale Seitenfläche. Die an die Schneidkante 28 grenzende Seitenfläche 18 ist eine quadratische großflächige Seitenfläche. Ebensolches gilt für die gegenüberliegende in Figur 25 verdeckte Seitenfläche 16. Die Befestigungsbohrung 21 führt von der Seitenfläche 18 zu der Seitenfläche 16. Die Seitenflächen dienen dabei als Anlageflächen für die Anlagefläche 6 an einem entsprechenden Plattensitz. Die Flächennormale der Auflagefläche 4 ist dabei beispielsweise in Umfangsrichtung orientiert. Die Seitenflächen sind facettiert. An die Schneidkanten 26, 27, 28, 29 sowie an die Eckenschneidkanten 32, 33, 34, 35 schließen Teilflächen an, von denen in Figur 25 die Teilflächen 18', 17 ' und 14' sichtbar sind. Damit weist die Schneidplatte 5 nach Figur 25 eine stark negative Geometrie auf. Die Spanfläche 25 ist jedoch soweit positiv eingestellt, dass sich bei stark negativem Einbau der Schneidplatte 5 ein positiver Spanwinkel ergibt.

Die Stufe 24 kann wie in Figur 25 dargestellt, gewählt ausgebildet sein. Sie trennt die Plateaufläche 22 ringsum von der Spanfläche 25. Im Bereich der Eckenschneidkanten 32 bis 35 weist die Stufe 24 ihre größte Höhe auf.

Die in Figur 26 veranschaulichte Schneidplatte unterscheidet sich von der vorbeschriebenen dadurch, dass die Eckenschneidkanten 32, 33, 34, 35 gerundet ausgebildet sind. Entsprechend sind die Eckenfasen 12 bis 15 jeweils als gewölbte Flächenbereiche ausgebildet. Im übrigen gilt die vorige Beschreibung.

Eine Schneidplatte 5, die z.B. zur Bestückung von Planfräsern vorgesehen ist, weist eine ringsumlaufende Spanfläche 25 auf, die in einer ununterbrochenen Stufe 24 in eine Plateaufläche 22 übergeht. Die Stufe 24 erreicht ihre größte Höhe in den Eckenbereichen der Schneidplatte 5. Die Spanfläche 25 legt einen positiven Spanwinkel fest. die Stufe 24 verhindert ein Anlaufen der erzeugten Späne an die Plateaufläche 22. Mit dieser Maßnahme wird ein Aufschmieren von Material von der Plateaufläche 22 verhindert. Die Schneidplatte kann auch in einem Drehwerkzeug oder einem anderen Zerspanungswerkzeug Anwendung finden.

## Patentansprüche

1. Schneidplatte (5), z.B. für Fräswerkzeuge (1),
mit einem Grundkörper (11), der wenigstens eine Spanfläche (25) aufweist, die einerseits jeweils an über Eckenschneidkanten (32, 33, 34, 35) verbundene Schneidkanten (26, 27, 28, 29) und andererseits an eine Stufe (24) angrenzt, die sich ununterbrochen zumindest entlang einer der Eckenschneidkanten (32, 33, 34, 35) erstreckt und die die Spanfläche (25) von einer zurück gesetzten Plateaufläche (22) trennt, **dadurch gekennzeichnet, dass** die Stufe (24) an der Eckenschneidkante (32, 33, 34, 35) ihre Maximalhöhe aufweist.

2. Schneidplatte nach Anspruch 1, **dadurch gekennzeichnet, dass** der Grundkörper (11) an zwei einander gegenüberliegenden Seiten (22, 23) ausgebildete Schneidkanten (26, 26a) aufweist.

3. Schneidplatte nach Anspruch 2, **dadurch gekennzeichnet, dass** die an den gegenüberliegenden Seiten (22; 23) ausgebildeten Schneidkanten (26, 27, 28, 29, 32, 33, 34, 35; 26a, 27a, 28a, 29a, 32a, 33a, 34a, 35a), Spanflächen (25; 25a) und Plateauflächen (22; 23) zueinander deckungsgleich ausgebildet sind.

4. Schneidplatte nach Anspruch 1, **dadurch gekennzeichnet, dass** der Grundkörper (11) einen viereckigen Umriss aufweist und dass die Schneidkanten (26, 27, 28, 29, 32, 33, 34, 35) somit als Grundform ein Viereck festlegen.

5. Schneidplatte nach Anspruch 1, **dadurch gekennzeichnet, dass** der Grundkörper (11) einen rechteckigen Umriss aufweist und dass die Schneidkanten (26, 27, 28, 29, 32, 33, 34, 35) somit als Grundform ein Rechteck festlegen.

6. Schneidplatte nach Anspruch 1, **dadurch gekennzeichnet, dass** der Grundkörper (11) einen quadratischen Umriss aufweist und dass die Schneidkanten (26, 27, 28, 29, 32, 33, 34, 35) somit als Grundform ein Quadrat festlegen.

7. Schneidplatte nach Anspruch 1, **dadurch gekennzeichnet, dass** die an einer Seite vorgesehenen Schneidkanten (26, 27, 28, 29, 32, 33, 34, 35) vier Eckenschneidkanten (32, 33, 34, 35) festlegen.

8. Schneidplatte nach Anspruch 7, **dadurch gekennzeichnet, dass** die Spanfläche (25) an jeder Eckenschneidkanten (32, 33, 34, 35) über eine Stufe (24) in die Plateaufläche (22) übergeht.

9. Schneidplatte nach Anspruch 1, **dadurch gekennzeichnet, dass** die Stufe (24), die die Spanfläche (25) von der Plateaufläche (22) trennt, eine Höhe aufweist, die ausreicht, um die an der Schneidkante (26, 27, 28, 29, 32, 33, 34, 35) entstehenden Späne (41) von der Plateaufläche (22) fernzuhalten.

10. Schneidplatte nach Anspruch 1, **dadurch gekennzeichnet, dass** die Spanfläche (25) an jeder Stelle einen positiven Spanwinkel festlegt.

11. Schneidplatte nach Anspruch 1, **dadurch gekennzeichnet, dass** an den Schneidkanten (26, 27, 28, 29, 32, 33, 34, 35) an jeder Stelle ein Keilwinkel vorgesehen ist, der kleiner als 90° ist.

12. Schneidplatte nach Anspruch 1, **dadurch gekennzeichnet, dass** der Grundkörper (11) Seitenflächen (16, 17, 18, 19) aufweist, die Freiflächen bilden.

13. Schneidplatte nach Anspruch 1, **dadurch gekennzeichnet, dass** die Seitenflächen (16, 17, 18, 19) rechtwinklig zu einer Mittelebene angeordnet sind, die durch den Schwerpunkt der Schneidplatte (5) geht.

14. Schneidplatte nach Anspruch 1, **dadurch gekennzeichnet, dass** die Seitenflächen (16, 17, 18, 19) facettiert sind.

15. Schneidplatte nach Anspruch 1, **dadurch gekennzeichnet, dass** die Seitenflächen (16, 17, 18, 19) jeweils wenigstens einen sich an die Schneidkanten (26, 27, 28, 29, 32, 33, 34, 35) anschließenden Freiflächenabschnitt (16', 17', 18', 19') aufweisen, der mit der übrigen Seitenfläche (16, 17, 18, 19) einen stumpfen Winkel einschließt.

16. Schneidplatte nach Anspruch 1, **dadurch gekennzeichnet, dass** die Schneidplatte (5) eine durch die Plateaufläche (22) gehende Befestigungsbohrung (21) aufweist.

17. Schneidplatte nach Anspruch 1, **dadurch gekennzeichnet, dass** die Schneidplatte (5) eine durch die Seitenfläche (18) gehende Befestigungsbohrung (21) aufweist.

18. Schneidplatte nach Anspruch 1, **dadurch gekennzeichnet, dass** die Stufe (24) ununterbrochen entlang der gesamten Spanfläche (25) ausgebildet ist.

19. Schneidplatte nach Anspruch 1, **dadurch gekennzeichnet, dass** die Stufe (24) entlang der Spanfläche (25) im wesentlichen gerade ausgebildet ist.

20. Schneidplatte nach Anspruch 1, **dadurch gekennzeichnet, dass** die Stufe (24) entlang der Spanfläche (25) leicht gewellt ausgebildet ist.

21. Schneidplatte nach Anspruch 1, **dadurch gekennzeichnet, dass** die Plateaufläche (22) wenigstens einen erhabenen Flächenbereich (42, 43, 44, 45) aufweist, der als Abstützfläche für den Plattensitz dient.

## Claims

1. Cutting tip (5), e.g. for milling cutters (1),
with a base body (11), which has at least one rake face (25), which on one side respectively adjoins cutting edges (26, 27, 28, 29) connected by means of corner cutting edges (32, 33, 34, 35) and on the other side adjoins a step (24), which extends without interruption at least along one of the corner cutting edges (32, 33, 34, 35) and which separates the rake face (25) from a set-back plateau face (22), **characterised in that** the step (24) has its maximum height at the corner cutting edge (32, 33, 34, 35).

2. Cutting tip according to claim 1, **characterised in that** the base body (11) has cutting edges (26, 26a) configured on two opposite sides (22, 23).

3. Cutting tip according to claim 2, **characterised in that** the cutting edges (26, 27, 28, 29, 32, 33, 34, 35; 26a, 27a, 28a, 29a, 32a, 33a, 34a, 35a) configured on the opposite sides (22; 23), rake faces (25; 25a) and plateau faces (22; 23) are configured to be congruent to one another.

4. Cutting tip according to claim 1, **characterised in that** the base body (11) has a quadrilateral contour, and that the cutting edges (26, 27, 28, 29, 32, 33, 34, 35) thus define a quadrilateral as basic form.

5. Cutting tip according to claim 1, **characterised in that** the base body (11) has a rectangular contour, and that the cutting edges (26, 27, 28, 29, 32, 33, 34, 35) thus define a rectangle as basic form.

6. Cutting tip according to claim 1, **characterised in that** the base body (11) has a square contour, and that the cutting edges (26, 27, 28, 29, 32, 33, 34, 35) thus define a square as basic form.

7. Cutting tip according to claim 1, **characterised in that** the cutting edges (26, 27, 28, 29, 32, 33, 34, 35) provided on one side define four corner cutting edges (32, 33, 34, 35).

8. Cutting tip according to claim 7, **characterised in that** the rake face (25) merges into the plateau face (22) at each corner cutting edge (32, 33, 34, 35) via a step (24).

9. Cutting tip according to claim 1, **characterised in that** the step (24), which separates the rake face (25) from the plateau face (22), has a sufficient height to keep the cuttings (41) forming at the cutting edge (26, 27, 28, 29, 32, 33, 34, 35) away from the plateau face (22).

10. Cutting tip according to claim 1, **characterised in that** the rake face (25) defines a positive rake angle at every point.

11. Cutting tip according to claim 1, **characterised in that** a wedge angle smaller than 90° is provided at every point on the cutting edges (26, 27, 28, 29, 32, 33, 34, 35).

12. Cutting tip according to claim 1, **characterised in that** the base body (11) has side faces (16, 17, 18, 19), which form relief flanks.

13. Cutting tip according to claim 1, **characterised in that** the side faces (16, 17, 18, 19) are arranged at right angles to a centre plane, which passes through the centre of gravity of the cutting tip (5).

14. Cutting tip according to claim 1, **characterised in that** the side faces (16, 17, 18, 19) are bevelled.

15. Cutting tip according to claim 1, **characterised in that** the side faces (16, 17, 18, 19) respectively have at least one relief flank section (16', 17', 18', 19') adjoining the cutting edges (26, 27, 28, 29, 32, 33, 34, 35), which encloses an obtuse angle with the remaining side face (16, 17, 18, 19).

16. Cutting tip according to claim 1, **characterised in that** the cutting tip (5) has a fastening hole (21) passing through the plateau face (22).

17. Cutting tip according to claim 1, **characterised in that** the cutting tip (5) has a fastening hole (21) passing through the side face (18).

18. Cutting tip according to claim 1, **characterised in that** the step (24) is arranged without interruption along the entire rake face (25).

19. Cutting tip according to claim 1, **characterised in that** the step (24) is arranged to be substantially straight along the rake face (25).

20. Cutting tip according to claim 1, **characterised in that** the step (24) is arranged to be slightly corrugated along the rake face (25).

21. Cutting tip according to claim 1, **characterised in that** the plateau face (22) has at least one raised surface region (42, 43, 44, 45), which serves as support surface for the tip seating.

## Revendications

1. Plaquette de coupe (5) destinée par exemple à des outils de fraisage (1), comprenant un corps de base (11) qui présente au moins une face de coupe (25) qui est contiguë sur un côté à des arêtes de coupe (26, 27, 28, 29) reliées par des arêtes de coupe d'angle (32, 33, 34, 35) et sur l'autre côté à un gradin (24) qui s'étend sans discontinuités le long d'au moins une des arêtes de coupe d'angle (32, 33, 34, 35) et qui sépare la face de coupe (25) d'une surface plateau (22) prévue en retrait, **caractérisée en ce que** le gradin (24) présente sa hauteur maximale au niveau de l'arête de coupe d'angle (32, 33, 34, 35).

2. Plaquette de coupe selon la revendication 1, **caractérisée en ce que** le corps de base (11) présente des arêtes de coupe (26, 26a) réalisées sur deux faces (22, 23) opposées.

3. Plaquette de coupe selon la revendication 2, **caractérisée en ce que** les arêtes de coupe (26, 27, 28, 29, 32, 33, 34, 35; 26a, 27a, 28a, 29a, 32a, 33a, 34a, 35a), les faces de coupe (25; 25a) et les surfaces plateaux (22; 23) réalisées sur les faces (22; 23) opposées coïncident les unes avec les autres.

4. Plaquette de coupe selon la revendication 1, **caractérisée en ce que** le corps de base (11) présente un contour quadrangulaire et **en ce que** les arêtes de coupe (26, 27, 28, 29, 32, 33, 34, 35) définissent ainsi un quadrilatère en tant que forme de base.

5. Plaquette de coupe selon la revendication 1, **caractérisée en ce que** le corps de base (11) présente un contour rectangulaire et **en ce que** les arêtes de coupe (26, 27, 28, 29, 32, 33, 34, 35) définissent ainsi un rectangle en tant que forme de base.

6. Plaquette de coupe selon la revendication 1, **caractérisée en ce que** le corps de base (11) présente un contour carré et **en ce que** les arêtes de coupe (26, 27, 28, 29, 32, 33, 34, 35) définissent ainsi un carré en tant que forme de base.

7. Plaquette de coupe selon la revendication 1, **caractérisée en ce que** les arêtes de coupe (26, 27, 28, 29, 32, 33, 34, 35) prévues sur une face définissent quatre arêtes de coupe d'angle (32, 33, 34, 35).

8. Plaquette de coupe selon la revendication 7, **caractérisée en ce que** la face de coupe (25) se raccorde au niveau de chaque arête de coupe d'angle (32, 33, 34, 35) par un gradin (24) à la surface plateau (22).

9. Plaquette de coupe selon la revendication 1, **caractérisée en ce que** le gradin (24), qui sépare la face de coupe (25) de la surface plateau (22), présente une hauteur qui est suffisante pour tenir éloignés de la surface plateau (22) les copeaux (41) formés sur l'arête de coupe (26, 27, 28, 29, 32, 33, 34, 35),

10. Plaquette de coupe selon la revendication 1, **caractérisée en ce que** la face de coupe (25) définit à chaque endroit un angle de coupe orthogonal positif.

11. Plaquette de coupe selon la revendication 1, **caractérisée en ce qu'**il est prévu à chaque endroit sur les arêtes de coupe (26, 27, 28, 29, 32, 33, 34, 35) un angle de taillant qui est inférieur à 90°.

12. Plaquette de coupe selon la revendication 1, **caractérisée en ce que** le corps de base (11) présente des faces latérales (16, 17, 18, 19) qui constituent des faces de dépouille.

13. Plaquette de coupe selon la revendication 1, **caractérisée en ce que** les faces latérales (16, 17, 18, 19) sont disposées perpendiculairement par rapport à un plan médian qui passe par le centre de gravité de la plaquette de coupe (5).

14. Plaquette de coupe selon la revendication 1, **caractérisée en ce que** les faces latérales (16, 17, 18, 19) sont biseautées.

15. Plaquette de coupe selon la revendication 1, **caractérisée en ce que** les faces latérales (16, 17, 18, 19) présentent chacune au moins une portion de face latérale (16', 17', 18', 19') qui se raccorde aux arêtes de coupe (26, 27, 28, 29, 32, 33, 34, 35) et forme un angle obtus avec le reste de la face latérale (16, 17, 18, 19).

16. Plaquette de coupe selon la revendication 1, **caractérisée en ce que** la plaquette de coupe (5) présente un trou de fixation (21) qui traverse la surface plateau (22).

17. Plaquette de coupe selon la revendication 1, **caractérisée en ce que** la plaquette de coupe (5) présente un trou de fixation (21) qui passe par la face latérale (18).

18. Plaquette de coupe selon la revendication 1, **caractérisée en ce que** le gradin (24) est réalisé sans discontinuités le long de toute la face de coupe (25).

19. Plaquette de coupe selon la revendication 1, **caractérisée en ce que** le gradin (24) est réalisé sous une forme sensiblement rectiligne le long de la face de coupe (25).

20. Plaquette de coupe selon la revendication 1, **caractérisée en ce que** le gradin (24) est réalisé sous une forme légèrement ondulée le long de la face de coupe (25).

21. Plaquette de coupe selon la revendication 1, **caractérisée en ce que** la surface plateau (22) présente au moins une zone de surface (42, 43, 44, 45) surélevée qui sert de surface d'appui pour le logement de la plaquette.
